# EUROPEAN PATENT SPECIFICATION

(11) **EP 1 328 147 B1**
(45) Date of publication and mention of the grant of the patent: **04.06.2008**
(21) Application number: 01981171.0
(22) Date of filing: 15.10.2001
(51) Int. Cl.: A01G 9/12

(54) **PLANT GUIDING COLUMN, ASSEMBLY COMPRISING A NUMBER OF SUCH COLUMNS, AND SHELTER**
PFLANZLEITSÄULE, ANORDNUNG MIT EINER ANZAHL VON SOLCHEN SÄULEN UND SCHUTZDACH
COLONNE DE GUIDAGE DE PLANTE, ENSEMBLE COMPRENANT PLUSIEURS DE CES COLONNES ET ABRI

(30) Priority: 16.10.2000 NL 1016413
(43) Date of publication of application: 23.07.2003
(73) Proprietor: Janssen, Wilhelmus Arnoldus Maria, 6584 AC Molenhoek (NL)
(72) Inventor: Janssen, Wilhelmus Arnoldus Maria, 6584 AC Molenhoek (NL)
(74) Representative: Prins, Adrianus Willem
(86) International application number: PCT/NL2001/000755
(87) International publication number: WO 2002/032216

(56) References cited:
- EP-A- 0 556 696
- DE-A- 3 730 666
- FR-A- 2 616 297
- FR-A- 2 643 786
- FR-A- 2 785 498
- US-A- 4 899 486
- PATENT ABSTRACTS OF JAPAN vol. 1996, no. 02, 29 February 1996 (1996-02-29) -& JP 07 274737 A (HAYASHI PROD CORP), 24 October 1995 (1995-10-24)

## Description

The invention relates to a plant guiding column for guiding a growing plant.

A column known from practice comprises a number of laths extending in vertical direction and at a mutual distance, along which a plant can grow upwards from the lower side of the column. Additionally, on the upper side of the column, a flower box can be placed. This flower box can be filled with a nutrient bed for a second plant which is destined to cover the upper side of the column and develop further from the upper side of the column. Further, this second plant can be trimmed in a particular shape, in order that the column and the plant growing thereon together form a decorative entity in a garden environment.

A drawback of the known plant guiding column is that the plant placed in a flower box on the column only has a limited root space at its disposal, provided by the volume of that box. As the roots of this plant only have a relatively small nutrient bed at their disposal, the plant cannot obtain a desired, relatively large leaf volume. Further, notably the roots of the plant placed on the column are relatively susceptible to freezing, which may lead to the plant dying off. Further, a flower box in filled condition is relatively heavy. As a result, the center of gravity of a column provided with such a flower box lies relatively high, so that there is a reasonable chance that the column, for instance by wind force applied to the column, will fall over.

Another drawback of the known column is that, by engaging at least an outer side of the column, a plant growing upwards along the column can affect this column outer side. The plant can for instance damage the column outer side, which can give the column a relatively ugly look, notably after removing a part of the plant. Further, a plant growing substantially upwards along the column needs to be trimmed time and again to avoid sideways growing branches of this plant reaching an undesirably large distance relative to the column. The fact is that these sideways growing branches can deprive the vegetation present near the column of light, or become entangled with this vegetation, which, in both cases, can hinder the growth of this vegetation. Moreover, uncontrolled growth of such sideways growing branches is disadvantageous to the look of the plant guiding column when a trim, well-kept look thereof is desired.

The present invention contemplates a plant guiding column wherein the drawbacks mentioned are avoided, while maintaining its advantages. In particular, the invention contemplates a plant guiding column wherein a plant has a relatively large nutrient bed at its disposal, is well protected against frost, the column can be handled well, while, further, a controllable growth of the plant can occur. To that end, a plant column according to the invention is characterized by the features of claim 1.

Such a plant guiding column can be disposed with the first end in, on or above a nutrient bed of a plant, the column extending away therefrom, for instance in a substantially vertical, horizontal or other direction. The plant, of which at least a root system is present in the nutrient bed under, at least around the first end of the column, can grow into the growing space, for instance via the first end of the column, to proceed to grow to the second end of the column. During its growth, the plant can further develop its root system in the nutrient bed. The plant can grow out of the second end of the column to there develop a relatively full leaf part and/or flower part. As the sidewall of the column is substantially closed, the plant will form no or hardly any shoots, leaves and/or flowers in the growing space. As a result, a well controllable growth of the plant can occur. An additional advantage is that, when the plant guiding column is used, the growing direction of the plant can be controlled well. The fact is that the growing direction is determined by the direction in which the column extends, and can therefore comprise a substantially vertical, horizontal or other growing direction. Moreover, as a result of the good food supply, the plant can form a desired relatively dense growth at the second end of the column. Thus, additionally, when using flowering plants, an improved bloom at the second end of the column can come to exist. Another advantage of this plant guiding column is that it does not guide the plant via the outside of the column. As a result, the outside of the column can remain in its original condition, not affected by the plant. An additional advantage of the column is that at the second end of the column, no flower box needs to be placed anymore to provide for a covering of that second end of the column, which may lead to the disadvantages already mentioned.

As the nutrient bed can be located at a relatively low height, the roots of the plant can be well protected from frost. As a result, an advantageous use of the column comprises guiding frost sensitive plants such as grapevines or other sorts of fruit, hollyhocks and the like.

A further important advantage is that the root system of the plant ensures a good anchoring of the plant guiding column which increases with further growth of the plant. Moreover, the column can offer support to the plant which, notably with relatively delicate, fragile plants, for instance hollyhocks or truss roses, can offer protection from snapping off. Also, the column can offer protection from damage to the plant when the plant is placed in a well-frequented location, for instance at a promenade or at the side of a road.

Further, the invention provides an assembly characterized by the features of claim 18.

This assembly can serve as a separation for separating two areas such as gardens or parts of gardens. Then, the columns extend in a substantially vertical direction. It is possible for such a separation to be provided with a relatively well-covered upper side, while the sides of the separation remain relatively bare. This can, for instance, be desired when the separation serves as a separation of a terrace, where the use of the terrace being hindered by branches of a plant guided upwards by a column is to be avoided. Depending on the plant used and the season, the covered upper side of the separation offers a pleasantly green, flowering upper edge. Furthermore, such a separation has a pleasant appearance.

Also, the assembly can be disposed, for instance, in a substantially horizontal plane, the columns extending in a substantially horizontal direction. In that case, the assembly can comprise, for instance, a floor or floor part of a terrace. This is advantageous because the assembly can guide plants under the terrace, whereby no shoot or root formation occurs under the terrace. Thus, a terrace floor is prevented from becoming deformed in an undesired manner, for instance in that terrace stones or tiles are dislodged.

Further, the invention provides a shelter according to the features of claim 20.

This shelter is an advantageous use of the plant guiding column provided by the invention, the above-mentioned advantages of the column having been added to a constructive use of the column. Further, by using the plant guiding column as a support means, the shelter has a very fanciful, attractively decorated look.

Further, the invention relates to a method for forming a garden ornament or like construction, characterized by the features of claim 21.

With such a method, the advantage is achieved that in a very simple manner, an ornament can be obtained with a particularly attractive look. Such an ornament can comprise, for instance, a substantially smooth column with an ornament, formed by a plant which has grown through the column mentioned and has exited same via, at least adjacent the second end. In the ground at the first end of the plant column, the plant can take root, for instance in the open ground or in a flowerbed or the like, so that a good anchoring of the plant, and hence of the ornament, is ensured, while, furthermore, the plant has a good nutrient bed for further growth. It will, for that matter, be clear that with a plant guiding column or method according to the invention also more than one plant can be guided by a plant guiding column.

With a method according to the present invention, a relatively young plant can be laid in in or near a first end of a plant column and be guided through the plant column during growth, but it is also possible that a relatively well developed plant with, for instance, a length comparable to the length of the plant column, is planted in the soil and is subsequently guided through the plant guiding column. To that end, for instance, the plant guiding column can be slid over the plant from a free second end, for instance when the plant is guided along a stick, but, also a plant column can be used provided with an inner column with, for instance, a slit-shaped opening through which the plant can be laid in, whereupon said opening is covered towards the outside, for instance by sliding an outer column over the inner column, or by forming an outer column by, for instance, fastening plank-shaped cover parts against the outer side of the inner column. Thus, the advantage is achieved that relatively rapidly an ornament at least full grown adjacent the second end is obtained. Here, the plant can be planted directly in the open ground yet it can also be raised with the aid of a pot or like element, while the pot can function as a support for the further plant column.

It will be clear that a plant guiding column according to the invention can also be combined with traditional plants which, for instance, can be guided along a part of the outside. In this manner, for instance, different plants can be combined at different distances along the column.

In the further subclaims, further advantageous embodiments of a plant guiding column, ornaments, separations and methods according to the invention are further described.

The present invention will be further described on the basis of a number of exemplary embodiments and the accompanying drawing. In the drawing:
Fig. 1 shows a front view of a first embodiment of the invention;
Fig. 2 shows a top plan view of the exemplary embodiment represented in Fig. 1;
Fig. 3 shows a front view of an application of the exemplary embodiment represented in Fig. 1;
Fig. 4 shows a front view of a second exemplary embodiment of the invention;
Fig. 5 shows a top plan view of the exemplary embodiment shown in Fig. 4;
Fig. 6 shows a front view of a third exemplary embodiment of the invention;
Fig. 7 shows a front view of a fourth exemplary embodiment of the invention;
Fig. 8 shows a front view of a fifth exemplary embodiment of the invention;
Fig. 9 shows a cross sectional view of a sixth exemplary embodiment of the invention;
Fig. 10 shows a front view of a seventh exemplary embodiment of the invention;
Fig. 11 shows a front view of an eighth exemplary embodiment of the invention;
Fig. 12 shows a front view of a ninth exemplary embodiment of the invention;
Fig. 13 shows a top plan view of the exemplary embodiment represented in Fig. 12;
Fig. 14 shows a front view of a separation according to the invention;
Fig. 15 shows a top plan view of the separation represented in Fig. 14;
Fig. 16 shows a similar top plan view to that of Fig. 15;
Fig. 17 shows a front view of a shelter according to the invention;
Fig. 18 shows a top plan view of the front view represented in Fig. 17;
Fig. 19 shows, in front view, an inner column for an alternative embodiment of a plant guiding column according to the invention;
Fig. 20 shows a side view of the front view represented in Fig. 19;
Fig. 21 shows a cross sectional view along line XXI-XXI of the front view represented in Fig. 19, the inner column being provided with an outer column having a circular cross section;
Fig. 22 shows a similar cross sectional view to that of Fig. 21, with an outer column having a square cross section being provided around the inner column;
Fig. 23 shows an example of an application of the exemplary embodiment shown in Figs. 19 - 21; and
Fig. 24 shows a schematically represented front view of an alternative use of the exemplary embodiment shown in Fig. 1.

In the description, a plant guiding column should at least be understood to include a garden ornament or like construction of the type represented in the drawings, wherein an at least somewhat elongated, substantially closed, column-shaped body is provided, while a plant extending through the column mentioned grows out at the second end. In the drawing, plant guiding columns are represented having, in top plan view, a substantially rectangular, in particular square cross section. However, it will be clear that they can have any desired cross section, for instance round, oval-shaped, triangular, multi-angular, such as hexagonal or octagonal or even having an irregular shape, depending on the desire of a user. Also, a plant guiding column according to the invention can have a cross section which varies along the length, so that, for instance, the plant guiding column tapers inwards or outwards, is slightly hour-glass shaped or, conversely, is wider near a center part than at the ends. Other variations thereon will be directly clear to the skilled person.

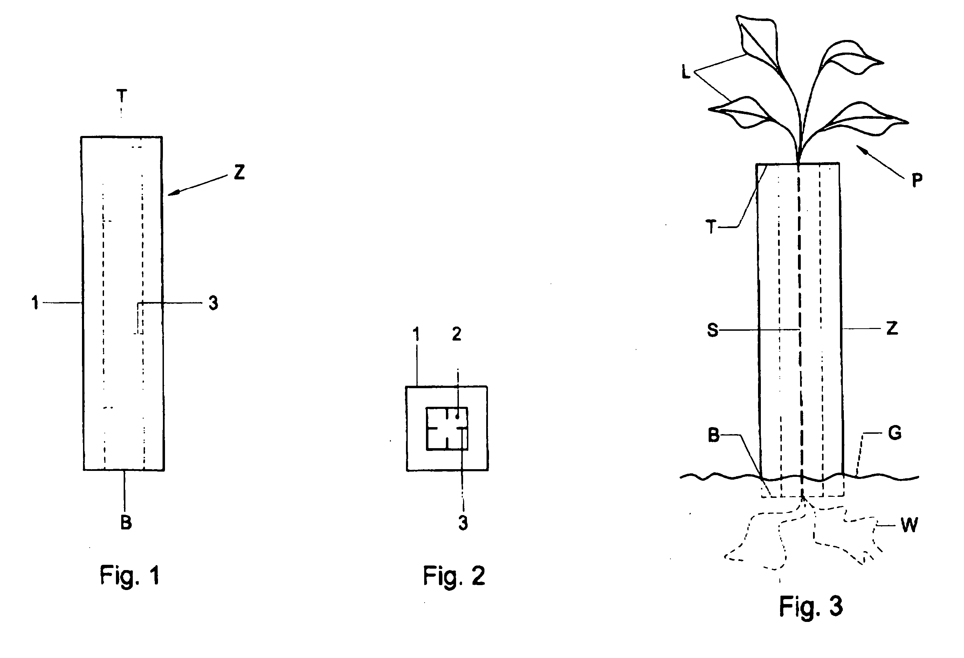

The embodiment represented in Figs. 1 and 2 comprises a plant guiding column Z provided with a sidewall 1, a first end B and second end T. The sidewall 1 encloses a growing space 2. Via the first and second end B, T, the growing space 2 is accessible from an environment in that the first end B and the second end T are both of open design. An inner side of the sidewall 1 is provided with plant support means 3, extending in the growing space 2. These support means 3 can comprise, for instance, wooden and/or metal pins.

Fig. 3 shows the use of the plant guiding column Z, the column extending from a ground G in substantially vertical direction to an environment. With the growing space 2, the column Z encloses a stem part S of a plant P. A root system W of the plant P extends in the ground G, which provides a nutrient bed for the plant P from which the plant P can extract water and nutrients. A part of the plant P, grown out of the second end T of the column Z comprises a leaf part L. The condition of growth of the plant P represented in Fig. 3 can have arisen in that the column Z has been put in the ground G, for instance in the open ground, with the first end B, while plant seeds have been put in the ground G underneath the column. One of these seeds can have germinated, and subsequently have grown into the growing space 2 of the column Z via the open first end B. Then, via the growing space 2, the thus grown plant P has grown to the second end T of the column Z under the influence of incidence of light in the growing space 2 from the second end T, such as incident sunlight. The plant P can have been supported by the plant support means 3, and/or have engaged it for hold. During the growth in the growing space 2, the plant P will have formed no or relatively few shoots, leaves and/or flowers, because the necessary light to that end is not, or at least insufficiently present in the growing space 2. The fact is that the sidewall 1 prevents lateral incidence of light. The plant P will only have formed shoots, leaf and/or flowers upon reaching the second end T of the column Z, where, conversely, sufficient light is available. Good growing results of the plant P can even be obtained with a column having a length of, for instance, at least 50 centimeters. Also lengths of at least 100 cm, and in particular of at least 150 cm, or more than 400 cm for high columns, can lead to good growing results, depending on the type of plant P growing on the column Z, and the surroundings in which the column Z is placed. Such a choice will be directly clear to the skilled person. Further, it is noted that the growing condition represented in Fig. 3 can also have arisen in that the column Z is placed, for instance, over a stem part S of an already germinated plant P.

The outside of the sidewall 1 is not covered so that it will not be affected by a plant engaging it. Further, the represented column Z renders the trimming of the plant P relatively simple, because the leaf part L of the plant P is only present in one place, i.e. at the second end of the column Z. Additionally, the plant P will be able to use the greater part of the water and nutrients extracted from the ground G for further developing the leaf part L so that it obtains a desired, relatively large leaf density. This leaf formation is not hindered by consumption of water, nutrients and energy as a result of undesired shoot, leaf and/or flower formation on the stem part S in the growing space 2. An additional advantage of the column Z is that watering the root part W of the plant P is relatively simple because the root part W is located at a relatively low height at the first end B of the column Z. Further, the relatively low position of the root part W limits the risk of freezing of that root part W. The column Z covered in the manner indicated is very suitable as a festive, decorative and/or atmospheric addition to an environment such as an ornament in a garden.

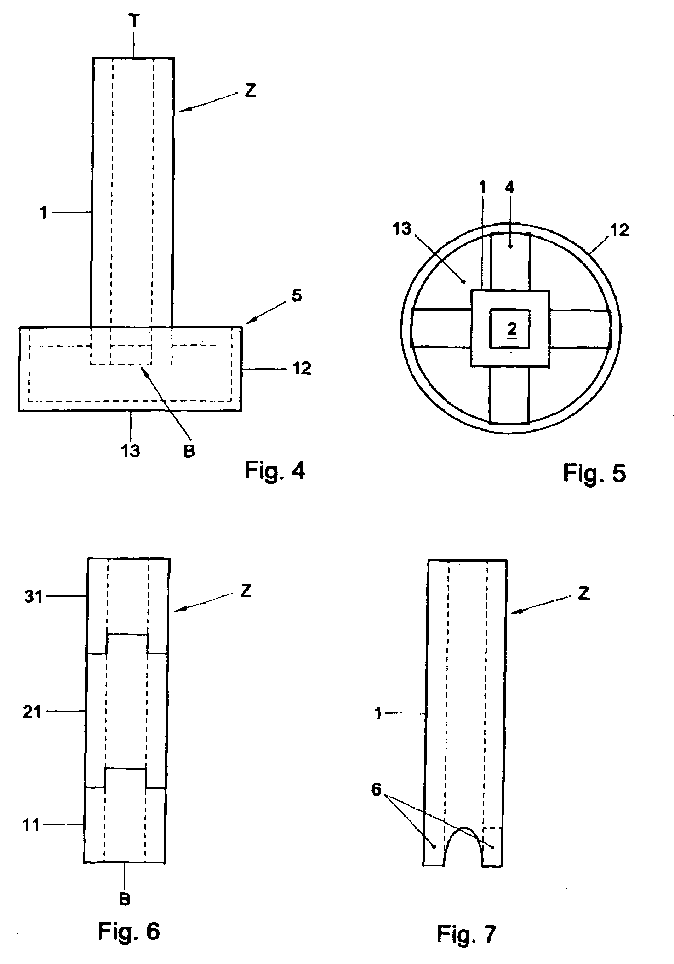

Figs. 4 and 5 show an alternative embodiment of the column Z, wherein the column is provided at the first end B with a flower box 5. The first end B of the column Z is located at a distance from a bottom 13 of the flower box 5. A sidewall 1 of the column Z is connected to the sidewall 12 of the flower box 5 with the aid of four connecting plates 4. In use, the flower box 5 can be filled with a nutrient bed for a root system W of a plant P. Subsequently, this plant P can grow via the growing space 2 of the column Z to the second end T of the column Z, as already described with reference to Fig. 3. Therefore, this embodiment of the column Z comprises a displaceable plant guiding column, which is advantageous when it is desired to successively dispose the column Z, the plant P growing thereon, at different locations. Moreover, a nursery man can simply have a plant grow on this displaceable column Z and trim it in a particular shape, prior to the thus overgrown column being sold and/or delivered to a customer. It is noted that the connection between the column Z and the flower box 5 can be brought about in different manners, for instance with leg-shaped elements connecting the first end B of the column to the bottom 13 of the flower box 5. Further, the flower box 5 can be detachably connected to the column Z, so that the flower box 5 and the column Z can be used independently of each other.

Fig. 6 shows an exemplary embodiment wherein the column Z is modularly built up from a number of stackable column modules 11, 21, 31. Hence, the length of this column Z can be modified, so that the column Z can, for instance, grow along with a plant growing in the column Z. Further, this column Z can be transported relatively simply by destacking the modules 11, 21, 31.

The embodiment represented in Fig. 7 comprises a column Z which is provided at the first end B with a number of legs 6. Therefore, this column Z can be placed at a distance from the ground G. Consequently, at the first end B of the column Z, a stem part S of a plant P growing in the growing space 2 is accessible from the outside. This is advantageous because, in this manner, near that stem part S, the plant P can be watered well. Furthermore, at the first end B of the column Z, the plant P can thus form branches which grow further between the legs 6. Hence, the plant P can form a good covering and overgrowth of the ground G, for instance such, that the boundary between the column Z and the ground G is no longer visible, which, in a particular garden design, can be desired.

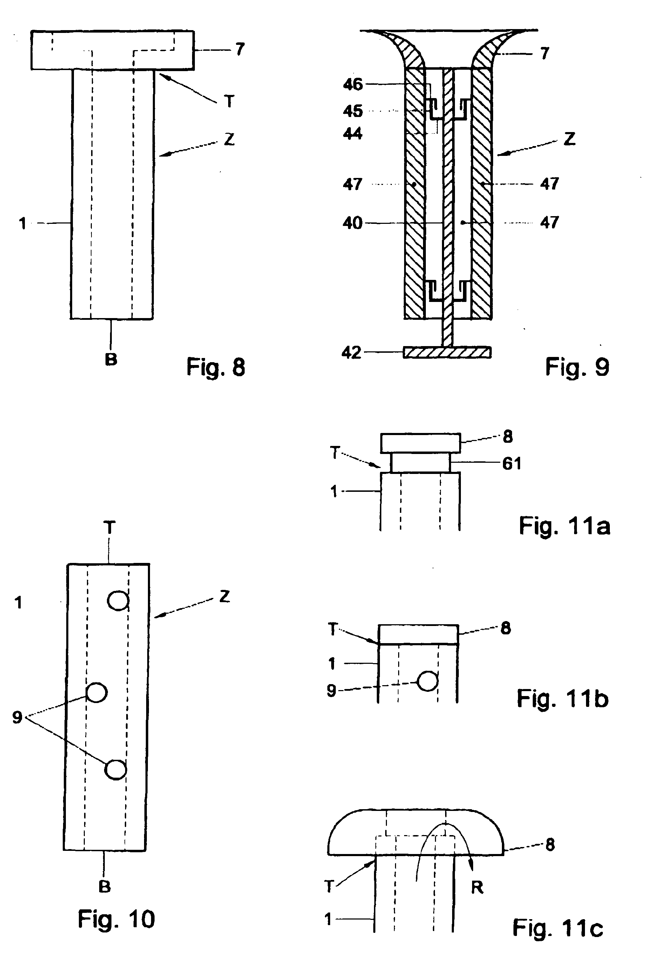

Fig. 8 and Fig. 9 each show an embodiment provided with a cap 7. In use, this cap 7 can offer support to a leaf part of a plant P growing out of the second end T of the column Z. Such a support cap 7 is advantageous in preventing the leaf part L of the plant P breaking and/or becoming damaged in, for instance, a relatively strong side wind. Further, this support cap 7 can provide an attractive, desired, decorative appeal to the column Z. To that end, the plant P can for instance grow on and around the support cap 7 as an ornament which can be trimmed in many different shapes. The support cap 7 can have a closed outer wall, but it can also be formed from, for instance, wire and/or gauze material along which and through which the plant can simply grow and be guided. Such a support cap can be designed to be open at the second side T, but it can also be of a closed design, for instance in the shape of a ball, block or like regularly or irregularly shaped elements which the plant can overgrow completely or partly. Thus, elegant shapes can be obtained which can be trimmed in a simple manner.

In Fig. 9, the plant guiding column Z is sectioned in the longitudinal direction so that a frame 40 is visible, carried by a foot 42 which can be secured in the ground. To the frame 40, brackets 44 are fastened, for instance by way of welding, which extend substantially at right angles to the frame 40 and are provided with lips 45 at their free ends. The growing space 2 is enclosed by covering elements 47, for instance planks, which, with the aid of bearing elements 46 can be secured on the brackets 44 over the lips 45. The covering elements 47 seal off in a substantially lightproof manner, for instance in that the elements can be pushed together tightly, optionally with interposition of sealings. A plant (not shown) can simply be guided along the frame 40, while the covering elements 47 can be fitted in a simple manner, for instance after the plant has been secured through the growing space, at least along the frame 40. Naturally, a similar or comparable frame construction is applicable with each of the embodiments described.

Fig. 10 shows an exemplary embodiment of the invention, wherein the column Z is provided with a number of growth passages 9 extending from the growing space 2 to the environment. These growth passages offer the plant P growing in the column Z the possibility to form, in situ, shoots and, subsequently, a branch. This branch of the plant P can grow to the environment via the growth passage 9. These growth passages 9 can provide that a plant P, which, by itself, will not grow directly from the first end B to the second end T of the column Z, will still grow upwards step by step from growth passage 9 to growth passage 9. Furthermore, a column Z with covered growth passages 9 and a covered second end T offers a very attractive and playful sight.

Figs. 11A, 11B, 11C show variants of an exemplary embodiment of the plant guiding column Z provided above the second end T with a cover plate 8. This cover plate 8 prevents a relatively large part of rainwater and/or impurities from entering the growing space 2 from above when the column is placed in a substantially vertical direction. Thus, water and/or impurities can be prevented from accumulating in the column Z, which can be disadvantageous to the growth of the plant P. The covering plate 8 may or may not be detachably connected to the column Z with, for instance, connecting rods 61 as indicated in Fig. 11A. Further, the plate 8 can be arranged such that it can cover the second end of the column in a completely or partially lightproof manner. This can be particularly advantageous when the column Z is also provided with the growth passages 9 represented in Fig. 10, see the variant shown in Fig. 11B, as this offers the plant P an alternative grow possibility allowing it to grow from the first end B to the limited number of growth passages 9. Furthermore, the plant will be forced outwards.

In Fig. 11C, a third variant of the cover plate 8 is represented, comprising a substantially lightproof covering 8 extending over the second end T. In this manner, a plant P growing out of the second end T of the column Z is prevented from growing further in upward direction. With the arrow R, a possible growing direction is indicated. Thus, for instance, the plant P can form a collar or growth extending downwards along the column Z under the covering 8, which is an alternative possibility for creating a particular, pleasant plant decoration.

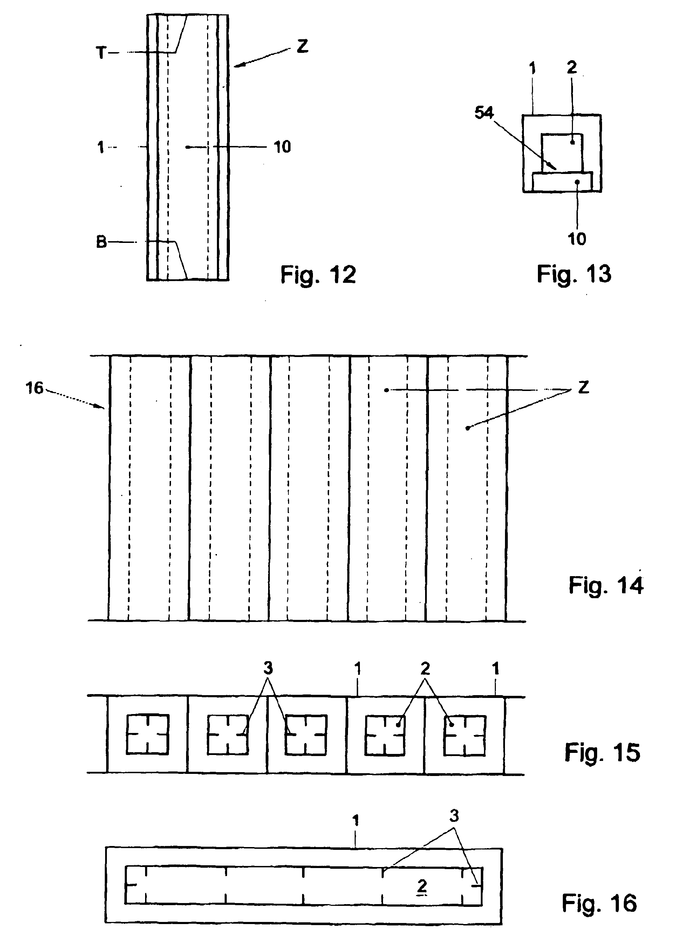

Fig. 12 and Fig. 13 both show an exemplary embodiment, in which the column Z is provided with a detachable wall part 10 which, in the position represented, closes off an access 54 in the sidewall 1. With this column Z, the invention can also be used in combination with a plant P which has already achieved a relatively long growing length, for instance a length longer than the length of the column Z. To that end, the wall part 10 is taken from the column Z to open up the access 54. Subsequently, the plant P is placed in the growing space 2 of the column Z. Then, the wall part 10 can be replaced in the sidewall 1 of the column Z, so that the entire plant P or a part thereof is present in the growing space 2 and can grow further to or at the second end T of the column Z. This embodiment of the plant guiding column is also advantageous for checking a part of the plant P present in the growing space 2 for, for instance, damages, development of diseases and/or other undesired disorders. The wall part 10 does not need to be completely detachably coupled to the sidewall 1, but can also be movably connected to the column Z, for instance by means of hinging connections. Further, a column Z can be provided with a number of such detachable and/or movable wall parts 10 or be built up from them, for instance as described with reference to Fig. 8.

Figs. 14 and 15 show an assembly 16 comprising a number of plant guiding columns Z. The columns Z can be coupled to each other in different manners for forming the assembly represented, while a wide range of coupling means can be used, known to the skilled person. The assembly 16 can also be made in one piece, provided with a number of substantially vertically extending growing spaces 2. Also, such an assembly 16 can be made in one piece and only comprise one growing space 2 as is indicated in Fig. 16. The assembly 16 offers the same advantages as the plant guiding column Z according to the invention. It can comprise a separation for separating two areas such as two gardens or parts of gardens. For instance, one side of such a separation Z can remain bare, so that it cannot thereby be affected. However, the top side of such a separation 16 can be provided with vegetation, a root part of which can develop in a ground on which the separation Z has been placed. This root part has a relatively large growing space at its disposal, so that the growth of the vegetation present on the separation 16 cannot be impeded by too small a root space, and a firm anchoring is obtained. Also, the assembly 16 can be used in a substantially horizontal position, for instance for guiding plants P underneath a terrace and/or to serve as a floor.

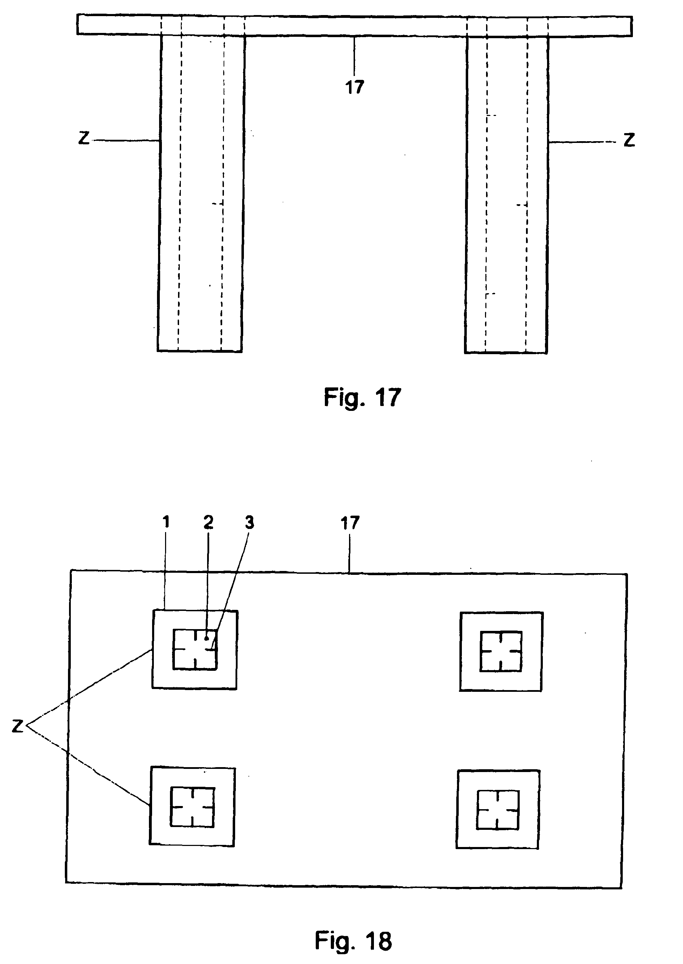

Figs. 17 and 18 show a use of the column Z, with a number of them being used as support column for a shelter 17. The shelter 17 can be secured to the column Z according to different methods known to the skilled person. By using the plant guiding column Z as support column, the area extending under the shelter 17 can remain free from vegetation, while a top side of the shelter 17 can obtain a covering by plants P which can grow upwards through the growing spaces 2 of the columns Z. Thus, the access to the space under the shelter 17 being hindered by branches of plants P, can be prevented.

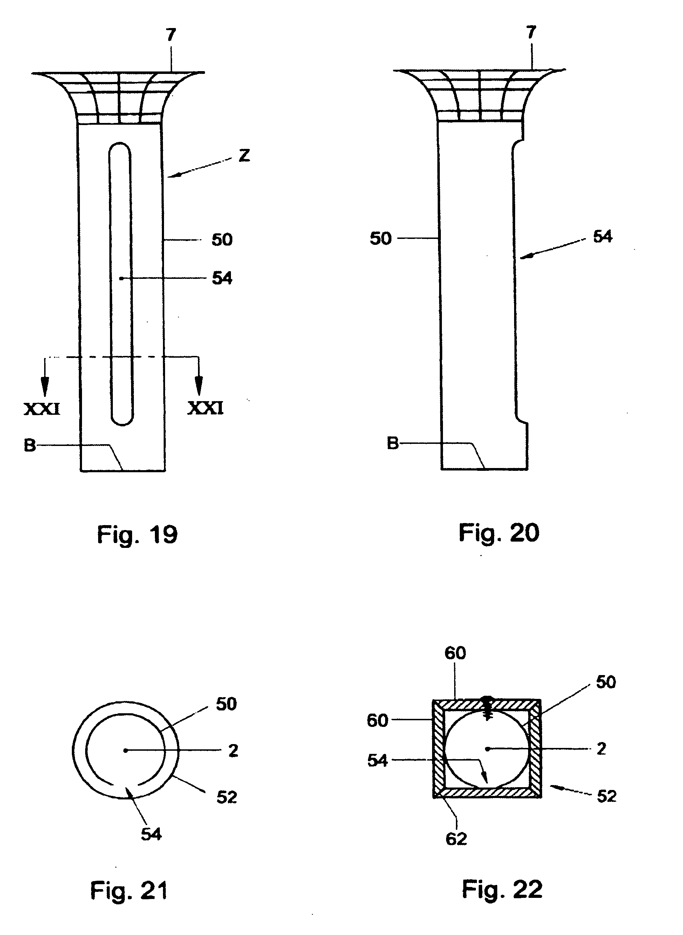

In Figs. 19 - 21 and 23, an alternative embodiment of a plant guiding column Z according to the invention is shown, substantially built up from an inner column 50 and an outer column 52. In the embodiment shown, the inner column 50 and the outer column 52 have a circular cross section and can be slid over each other with a relatively wide sliding fit. Over a large part of its length, the inner column 50 has a slit-shaped opening 54 enclosing the growing space 2. At the second end T, a support element 7 in the form of a wire basket is provided. The outer column 52 is substantially closed.

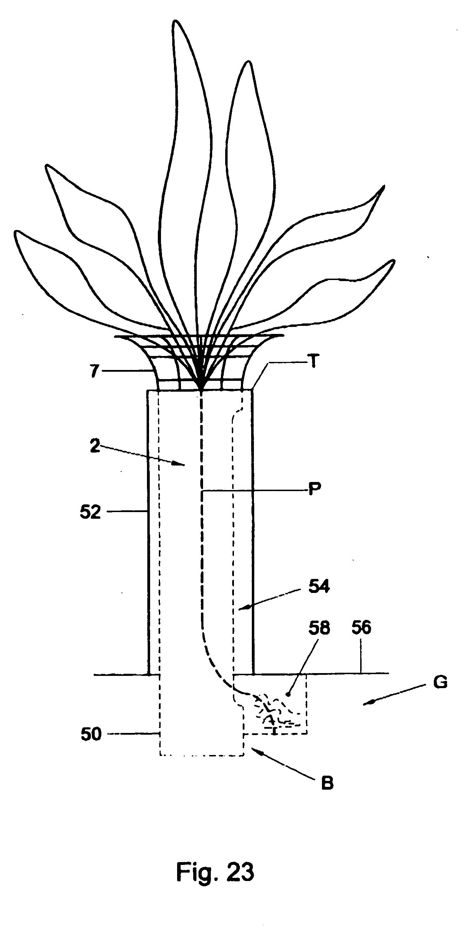

Fig. 23 shows the use of this alternative embodiment. By the first end B thereof, the inner column 50 is dug in or otherwise introduced into the ground, for instance to a depth such that the lower end of the slit-shaped opening 54 is located under ground level 56. Next to the slit-shaped opening 54, a planting hole 58 is dug, in which a plant P is planted. Preferably, the plant P already has a relatively long length, for instance a length approximately corresponding with the length of the part of the inner column 50 and/or the outer column 52 extending above the ground. Via the slit-shaped opening 54, the plant P is brought into the inner column 50, at least into the growing space 2 and guided, via the open second end T, into the wire basket 7. Subsequently, the wire basket 7 is pressed together and the outer column 52 is slid from the second end T over the inner column 50, for instance until it rests on the ground, while the planting hole 58 is filled up. Thus, the slit-shaped opening 54 is covered and the growing space 2 is closed to be lightproof, except for the open, second end. Then, the wire basket 7 can regain its original shape and the plant can grow along or through it. Naturally, the wire basket 7 can also be omitted, be placed later on or be secured to the outer column 54 and be placed along with it.

Fig. 22 shows an alternative cross section of the last-mentioned alternative embodiment of a plant guiding column Z according to the invention. Around the inner column 50 with a circular cross section, four planks 60 have been fitted, for instance screwed against the inner column 50, which planks 60 fittingly abut each other, for instance by a mitring 62. The planks 60 close off the slit-shaped opening 54. Here too, it holds that, naturally, many alternative cross sections are possible.

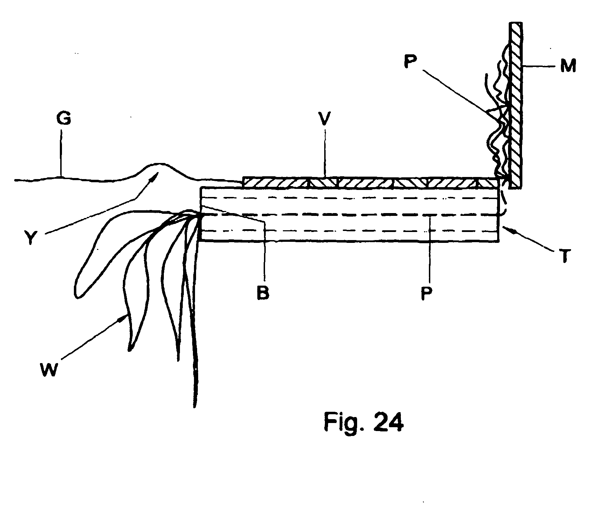

The exemplary embodiments shown in Figs. 1-23 show plant guiding columns extending in vertical direction. The column Z can equally well extend in another direction, which is indicated in Fig. 24. Here, the column Z extends under a tiled floor V to an adjacent wall M. From the second end T of the column Z, the schematically represented plant P can grow upwards along the wall, while its root part W extends in a part of the nutrient bed G located next to the tile floor, from the first end B of the column Z. By using the column Z, it is prevented that the root part W grows under the tile floor V, which may lead to the tiles of the tile floor being dislodged by soil displacement, as is indicated with the arrow Y.

It is self-evident that the present invention is not limited to the exemplary embodiments described, but that various modifications within the framework of the invention are possible

For instance, the column Z can comprise different shapes, such as angular, circular, cylindrical, amphora-shaped and/or a combination of these or other shapes. Further, the column Z can be provided with one or a number of growing spaces 2. Further, the length of the column Z may be at least 50 cm, but may also be shorter. The column Z can be manufactured from different materials, for instance metal, wood, plastic, rubber, stone, concrete, glass fiber, earthenware such as terra-cotta and a combination of these or other materials.

Further, the column Z can be built up modularly for the purpose of modifying the height of the column, but the column Z can, for instance, also be provided with other height modification means. For instance, the column Z can be of telescopic design, so that it can be slid in and out.

Furthermore, on the column Z, various decorative objects can be provided such as lighting, nest boxes, advertisements, plant boxes, feeding bowls for birds or squirrels and the like.

Furthermore, the column may serve as an advertising column. A great many different things such as a bench, a waste bin, a water tap, a bicycle stand, a picnic table for, for instance, a park, can be provided on one or a number of plant guiding columns Z.

Also, the column can be designed to be multi-walled, be provided with insulation and/or with heating and/or cooling means.

Further, a wall can be provided with one or a number of columns. For instance, a cavity wall can easily accommodate a plant guiding column. It is also possible that a column Z extends though a passage of a wall between spaces which are separated from each other by this wall.

Additionally, a large variety of plants and/or small trees can be used in combination with the plant guiding column, such as climbers, shrub or hedge forming plants, aquatic plants, trees for forming bonsai trees, and other plants. Moreover, with a column Z a combination of plants can be guided upwards. Use of the column is also possible with vegetable/fruit plants and trees, while these can be guided to a particular desired picking height, which, for instance, can be desired in vineyards. Further, through the guidance of the column Z, the fruit bearing part of the respective plant can be brought to a height such, that these are more difficult to reach for detrimental vermin, such as, for instance, snails. Further, the column Z may serve as protection for one or a number of plants, for instance hollyhocks or other roses or plants, which, for instance, is advantageous when the plant is arranged in a public space, but the column Z can also offer a good protection to a plant in other locations.

Further, the plant support means 3 can be designed in different manners, such as gauze present in a growing space 2 or a support frame such as a pole, lamp post, column and/or profile. Such support means can be manufactured from various materials, such as a metal, wood and/or plastic. The plant support means 3 can be arranged for, as it were, actively supporting the plant, and/or be arranged to merely serve as a hold for the plant growing in the growing space.

Additionally, the column Z can be used with existing plants P which, for instance, have grown along supports such as poles, lamp posts, columns, frames and/or profiles. Then, the column Z is provided around the plant according to the method provided by the invention.

## Claims

1. A plant guiding column for guiding a growing plant, provided with a first and second end and a substantially closed sidewall (1) extending between the first end (B) and the second end (T) and enclosing a growing space (2), such that the plant guiding column (Z) can guide the plant (P) from the first end (B) through the growing space (2) to the second end (T), the plant being able to grow out of the growing space (2) via the second end (T), while undesired growth of at least shoots on the part of the plant present in the growing space (2) is substantially prevented, **characterised in that** the second end (T) of the plant guiding column (Z) is provided with a support device (7) arranged for offering support to a plant (P) growing out of the growing space (2) at the second end (T).

2. A plant guiding column according to claim 1, wherein the column (Z) is provided with plant support means (3) extending in the growing space (2) for the purpose of providing support and/or a hold to the plant (P) growing in the growing space (2).

3. A plant guiding column according to claim 2, wherein the plant support means (3) comprise a frame extending in the growing space (2).

4. A plant guiding column according to any one of the preceding claims, wherein the column (Z) is provided with support means (4, 5) arranged for supporting the column (Z) in a position extending substantially in vertical direction.

5. A plant guiding column according to claim 4, wherein the support means (4) are provided with a flower box (5) arranged to be filled with a nutrient bed (G) for a root system (W) of the plant (P).

6. A plant guiding column according to any one of the preceding claims, wherein the column (Z) comprises length modifying means for the purpose of modifying the length of the column (Z).

7. A plant guiding column according to claim 6, wherein the column (Z) comprises a number of column modules (11, 21, 31) which can be coupled to each other such, that by adding a column module (11, 21, 31) to or removing a column module (11, 21, 31) from the column (Z), the length of the column (Z) can be modified.

8. A plant guiding column according to any one of the preceding claims, wherein at least the first end (B) of the plant guiding column (Z) is provided with distancing means (6), such as legs, arranged to keep the first end (B) of the column (Z) at a distance from a nutrient bed (G) of the plant (P) located under the first end (B).

9. A plant guiding column according to any one of the preceding claims, wherein the column (Z) is provided with a substantially lightproof covering (8) extending above the second end (T).

10. A plant guiding column according to any one of the preceding claims, wherein the column (Z) is provided with movable closing means (8) which, in a first position, close off the second end (T) of the column (Z) in a substantially lightproof manner, and, in a second position, open up the second end (T) of the column (Z).

11. A plant guiding column according to any one of the preceding claims, wherein the sidewall (1) of the column (Z) is provided with a limited number of growth passages (9), such that a limited number of branches of the plant (P) growing in the growing space (2) can grow via the growth passages (9) to an environment.

12. A plant guiding column according to any one of the preceding claims, wherein the sidewall (1) of the column (Z) is provided with a movable wall part (10; 52) which, in a first position closes off an access (54) to the growing space (2) located in the sidewall (1), and, in a second position, opens up this access (54).

13. A plant guiding column according to claim 12, wherein the movable wall part (10) is designed to be jointed.

14. A plant column according to claim 12 or 13, wherein the plant column (Z) comprises an inner column (50) in which said access (54) has been arranged, wherein said movable wall part comprises an outer column (52), which is placeable, in particular slideable over the inner column (50).

15. A plant guiding column according to any one of the preceding claims, wherein the length of the column (Z) is at least 50 centimeters, and more in particular at least 100 centimeters.

16. A plant guiding column according to any one of the preceding claims, wherein the length of the column (Z) is at least 150 cm.

17. A plant guiding column according to any one of the preceding claims, wherein a ground element is provided to be placed in the ground (G), in which a plant is or can be placed, while a column can be placed in or over said ground element for forming the plant column (Z), at least the growing space (2).

18. A plant guiding column according to any one of the preceding claims, wherein the column (Z) is provided with lighting.

19. A plant guiding column according to any one of the preceding claims, wherein the support device (7) is formed from wire and/or gauze material along which and through which the plant can grow and be guided.

20. An assembly comprising a number of plant guiding columns (Z) according to any one of the preceding claims, placed next to each other.

21. An assembly according to claim 20, wherein the columns (Z) are connected to each other by connecting means.

22. A shelter which is kept at a distance above a ground surface (G) by a number of supports, wherein the supports comprise plant guiding columns (Z) according to any one of claims 1-19.

23. A method for forming a garden ornament or like construction, wherein a guiding column (Z) is placed in, on or above the ground (G), wherein a plant, in particular a climber, is planted in or at the first end (B) of the guiding column (Z) located near the ground, and subsequently is guided into and through the guiding column (Z) to the second end (T) of the guiding column (Z), **characterised in that** the guiding column (Z) is provided at or at least near the second end (T) with a support device (7) arranged for offering support to a plant (P) growing out of the growing space (2) at the second end (T), wherein the plant is guided along the support device (7).

24. A method according to claim 23, wherein the guiding column (Z) is built up from a frame (40, 42) which is secured in the ground (G), wherein covering elements (47) are placed against the frame (40, 42) around a plant (P) guided along the frame, for screening the plant in a substantially light proof manner, at least other than to the second end (T) of the thus formed guiding column (Z).

25. A method according to any one of claims 23 - 24, wherein the guiding column (Z) is built up from at least an inner column (50) and an outer column (52), wherein the inner column (50) is provided with a slit-shaped opening (54) extending substantially in the longitudinal direction, which inner column (50) is introduced in the ground (G) with a first end (B), such that said opening (54) reaches into or near the ground, wherein near said opening (54) a plant (P) is placed in the ground and is guided into the growing space (2), optionally via said opening (54), whereupon, subsequently, an outer column (52) is provided over the inner column (50) for closing off said opening (54).

## Patentansprüche

1. Pflanzenführungsgestell zur Führung einer wachsenden Pflanze, welches mit einem ersten und mit einem zweiten Ende und mit einer im Wesentlichen geschlossenen Seitenwand (1), welche sich zwischen dem ersten Ende (B) und dem zweiten Ende (T) erstreckt und einen Raum (2) zum Wachsen umgibt, versehen ist, so dass das Pflanzenführungsgestell (Z) die Pflanze (P) von dem ersten Ende (B) durch den Raum (2) zum Wachsen zu dem zweiten Ende (T) führen kann, wobei die Pflanze über das zweite Ende (T) aus dem Raum (2) zum Wachsen heraus wachsen kann, während ein unerwünschtes Wachstum zumindest von Sprossen auf dem Teil der Pflanze, welcher sich in dem Raum (2) zum Wachsen befindet, im Wesentlichen verhindert wird, **dadurch gekennzeichnet, dass** das zweite Ende (T) des Pflanzenführungsgestells (Z) mit einer Haltevorrichtung (7) versehen ist, welche derart angeordnet ist, dass sie für eine Pflanze (P) einen Halt bietet, welche an dem zweiten Ende (T) aus dem Raum (2) zum Wachsen herauswächst.

2. Pflanzenführungsgestell nach Anspruch 1, **dadurch gekennzeichnet, dass** das Gestell (Z) mit Pflanzenhaltemitteln (3), welche sich in den Raum (2) zum Wachsen für den Zweck einer Bereitstellung einer Stütze und/oder eines Halts für die Pflanze (P), welche in dem Raum (2) zum Wachsen wächst, erstrecken.

3. Pflanzenführungsgestell nach Anspruch 2, **dadurch gekennzeichnet, dass** die Pflanzenhaltemittel (3) einen Rahmen umfassen, welcher sich in den Raum (2) zum Wachsen erstreckt.

4. Pflanzenführungsgestell nach einem der vorhergehenden Ansprüche, **dadurch gekennzeichnet, dass** das Gestell (Z) mit Haltemitteln (4, 5) versehen ist, welche zum Halten des Gestells (Z) in einer Stellung, welche sich im Wesentlichen in einer vertikalen Richtung erstreckt, ausgestaltet sind.

5. Pflanzenführungsgestell nach Anspruch 4, **dadurch gekennzeichnet, dass** die Haltemittel (4) mit einem Blumenkasten (5) versehen sind, welcher derart ausgestaltet ist, das er mit einer Nährmittelschicht (G) für ein Wurzelsystem (W) der Pflanze (P) zu füllen ist.

6. Pflanzenführungsgestell nach einem der vorhergehenden Ansprüche, **dadurch gekennzeichnet, dass** das Gestell (Z) die Länge verändernde Mittel für den Zweck einer Veränderung der Länge des Gestells (Z) umfasst.

7. Pflanzenführungsgestell nach Anspruch 6, **dadurch gekennzeichnet, dass** das Gestell (Z) eine Anzahl von Gestellmodulen (11, 21, 31) umfasst, welche miteinander gekoppelt werden können, so dass die Länge des Gestells verändert werden kann, indem ein Gestellmodul (11, 21, 31) zu dem Gestell (Z) hinzugefügt oder ein Gestellmodul (11, 21, 31) von diesem entfernt wird.

8. Pflanzenführungsgestell nach einem der vorhergehenden Ansprüche, **dadurch gekennzeichnet, dass** zumindest das erste Ende (B) des Pflanzenführungsgestells (Z) mit Abstandmitteln (6), wie z.B. Beinen, versehen ist, welche derart ausgestaltet sind, dass sie das erste Ende (B) des Gestells (Z) in einem Abstand von einer Nährmittelschicht (G) der Pflanze (P) halten, welche unterhalb des ersten Endes (B) angeordnet ist.

9. Pflanzenführungsgestell nach einem der vorhergehenden Ansprüche, **dadurch gekennzeichnet, dass** das Gestell (Z) mit einer im Wesentlichen lichtundurchlässigen Abdeckung versehen ist, welche sich über das zweite Ende (T) erstreckt.

10. Pflanzenführungsgestell nach einem der vorhergehenden Ansprüche, **dadurch gekennzeichnet, dass** das Gestell (Z) mit beweglichen Verschlussmitteln (8) versehen ist, welche in einer ersten Stellung das zweite Ende (T) des Gestells (Z) in einer im Wesentlichen lichtundurchlässigen Weise verschließen und welche in einer zweiten Stellung das zweite Ende (T) des Gestells (Z) offen halten.

11. Pflanzenführungsgestell nach einem der vorhergehenden Ansprüche, **dadurch gekennzeichnet, dass** die Seitenwand (1) des Gestells (Z) mit einer begrenzten Anzahl von Durchgängen (9) zum Wachsen versehen ist, so dass eine begrenzte Anzahl von Zweigen der Pflanze (P), welche in dem Raum (2) zum Wachsen wächst, über die Durchgänge (9) zum Wachsen in ein Umfeld wachsen kann.

12. Pflanzenführungsgestell nach einem der vorhergehenden Ansprüche, **dadurch gekennzeichnet, dass** die Seitenwand (1) des Gestells (Z) mit einem beweglichen Wandteil (10; 52) versehen ist, welches in einer ersten Stellung einen Zugang (54) zu dem Raum (2) zum Wachsen, welcher innerhalb der Seitenwand (1) angeordnet ist, verschließt, und welches in einer zweiten Stellung diesen Zugang (54) offen hält.

13. Pflanzenführungsgestell nach Anspruch 12, **dadurch gekennzeichnet, dass** das bewegliche Wandteil (10) mit Gliedern ausgestaltet ist.

14. Pflanzenführungsgestell nach Anspruch 12 oder 13, **dadurch gekennzeichnet, dass** das Pflanzenführungsgestell (Z) ein inneres Gestell (50) umfasst, in welchem der Zugang (54) angeordnet worden ist, und dass das bewegliche Wandteil ein äußeres Gestell (52) umfasst, welches insbesondere gleitend über dem inneren Gestell (50) platzierbar ist.

15. Pflanzenführungsgestell nach einem der vorhergehenden Ansprüche, **dadurch gekennzeichnet, dass** die Länge des Gestells (Z) mindestens 50 cm und darüber hinaus insbesondere mindestens 100 cm beträgt.

16. Pflanzenführungsgestell nach einem der vorhergehenden Ansprüche, **dadurch gekennzeichnet, dass** die Länge des Gestells (Z) mindestens 150 cm beträgt.

17. Pflanzenführungsgestell nach einem der vorhergehenden Ansprüche, **dadurch gekennzeichnet, dass** ein Bodenelement vorhanden ist, um in dem Boden (G) angeordnet zu werden, in welchem eine Pflanze angeordnet ist oder angeordnet werden kann, während ein Gestell in oder über dem Bodenelement angeordnet werden kann, um das Pflanzenführungsgestell, zumindest den Raum (2) zum Wachsen, auszubilden.

18. Pflanzenführungsgestell nach einem der vorhergehenden Ansprüche, **dadurch gekennzeichnet, dass** das Gestell (Z) mit einer Beleuchtung versehen ist.

19. Pflanzenführungsgestell nach einem der vorhergehenden Ansprüche, **dadurch gekennzeichnet, dass** die Haltevorrichtung (7) aus einem Draht- und/oder Gazematerial ausgebildet ist, entlang welchem und durch welches die Pflanze wachsen und geführt werden kann.

20. Anordnung, welche eine Anzahl von Pflanzenführungsgestellen (Z) nach einem der vorhergehenden Ansprüche umfasst, welche nebeneinander angeordnet sind.

21. Anordnung nach Anspruch 20, **dadurch gekennzeichnet, dass** die Gestelle (Z) durch Verbindungsmittel miteinander verbunden sind.

22. Schutzraum, welcher durch eine Anzahl von Halterungen mit einem Abstand über einer Bodenoberfläche (G) gehalten wird, wobei die Halterungen Pflanzenführungsgestelle (Z) nach einem der Ansprüche 1-19 umfassen.

23. Verfahren zur Ausbildung einer Gartenverzierung oder einer ähnlichen Konstruktion, wobei ein Führungsgestell (Z) in, auf oder über dem Boden (G) angeordnet wird, wobei eine Pflanze, insbesondere eine Schlingpflanze, bei oder an dem ersten Ende (B) des Führungsgestells (Z), welches in der Nähe des Bodens angeordnet ist, gepflanzt wird und anschließend innerhalb und durch das Führungsgestell (Z) zu dem zweiten Ende (T) des Führungsgestells (Z) geführt wird, **dadurch gekennzeichnet, dass** das Führungsgestell (Z) an oder zumindest in der Nähe des zweiten Endes (T) mit einer Haltevorrichtung (7) versehen ist, welche ausgestaltet ist, um einer Pflanze (P), welche an dem zweiten Ende (T) aus dem Raum (2) zum Wachsen herauswächst, einen Halt zu bieten, wobei die Pflanze entlang der Haltevorrichtung (7) geführt wird.

24. Verfahren nach Anspruch 23, **dadurch gekennzeichnet, dass** das Führungsgestell (Z) von einem Rahmen (40, 42) ausgebildet wird, welcher in dem Boden (G) befestigt ist, und dass Abdeckungselemente (47) um eine Pflanze (P), welche entlang des Rahmens geführt wird, herum gegen den Rahmen (40, 42) angeordnet werden, um die Pflanze zumindest an einem anderen als dem zweiten Ende (T) des **dadurch** ausgebildeten Führungsgestells (Z) in einer im Wesentlichen lichtundurchlässigen Weise abzuschirmen.

25. Verfahren nach einem der Ansprüche 23 - 24, **dadurch gekennzeichnet, dass** das Führungsgestell (Z) von zumindest einem inneren Gestell (50) und einem äußeren Gestell (52) ausgebildet wird, dass das innere Gestell (50) mit einer schlitzförmigen Öffnung (54) versehen ist, welche sich im Wesentlichen in der Längsrichtung erstreckt, dass das innere Gestell (50) mit einem ersten Ende (B) in den Boden (G) eingeführt wird, so dass die Öffnung (54) in den Boden reicht oder in die Nähe des Bodens reicht, und dass in der Nähe der Öffnung (54) eine Pflanze (P) in dem Boden angeordnet wird und in dem Raum (2) zum Wachsen optional über die Öffnung (54) geführt wird, wobei anschließend ein äußeres Gestell (52) über dem inneren Gestell (50) bereitgestellt wird, um die Öffnung (54) zu verschließen.

## Revendications

1. Colonne de guidage de plante, destinée à guider une plante qui pousse, dotée de première et deuxième extrémités et d'une paroi latérale substantiellement fermée (1) s'étendant entre la première extrémité (B) et la deuxième extrémité (T) et enfermant un espace de croissance (2), de sorte que la colonne de guidage de plante (Z) peut guider la plante (P) à partir de la première extrémité (B) à travers l'espace de croissance (2) jusqu'à la deuxième extrémité (T), la plante étant capable de pousser hors de l'espace de croissance (2) par le biais de la deuxième extrémité (T), tandis que la croissance non souhaitée d'au moins des pousses sur la partie de la plante présente dans l'espace de croissance (2) est substantiellement empêchée, **caractérisée en ce que** la deuxième extrémité (T) de la colonne de guidage de plante (Z) est dotée d'un dispositif de support (7) agencé pour offrir un support à une plante (P) qui pousse hors de l'espace de croissance (2) au niveau de la deuxième extrémité (T).

2. Colonne de guidage de plante selon la revendication 1, dans laquelle la colonne (Z) est dotée d'un moyen de support de plante (3) s'étendant dans l'espace de croissance (2) dans le but de fournir un support et/ou un maintien à la plante (P) qui pousse dans l'espace de croissance (2).

3. Colonne de guidage de plante selon la revendication 2, dans laquelle le moyen de support de plante (3) comprend une structure s'étendant dans l'espace de croissance (2).

4. Colonne de guidage de plante selon l'une quelconque des revendications précédentes, dans laquelle la colonne (Z) est dotée d'un moyen de support (4, 5) agencé pour supporter la colonne (z) dans une position s'étendant substantiellement dans la direction verticale.

5. Colonne de guidage de plante selon la revendication 4, dans laquelle le moyen de support (4) est doté d'une jardinière (5) agencée pour être remplie d'une couche nutritive (G) destinée à un système racinaire (W) de la plante (P).

6. Colonne de guidage de plante selon l'une quelconque des revendications précédentes, dans laquelle la colonne (Z) comprend un moyen de modification de longueur à des fins de modification de la longueur de la colonne (Z).

7. Colonne de guidage de plante selon la revendication 6, dans laquelle la colonne (Z) comprend un certain nombre de modules de colonne (11, 21, 31) qui peuvent être couplés les uns aux autres de sorte que, en ajoutant un module de colonne (11, 21, 31) à la colonne (Z) ou en enlevant un module de colonne (11, 21, 31) à celle-ci, la longueur de la colonne (Z) peut être modifiée.

8. Colonne de guidage de plante selon l'une quelconque des revendications précédentes, dans laquelle au moins la première extrémité (B) de la colonne de guidage de plante (Z) est dotée d'un moyen d'écartement (6), tel que des pattes, agencé pour maintenir la première extrémité (B) de la colonne (Z) à une certaine distance d'une couche nutritive (G) de la plante (P) située sous la première extrémité (B).

9. Colonne de guidage de plante selon l'une quelconque des revendications précédentes, dans laquelle la colonne (Z) est dotée d'un couvercle substantiellement opaque (8) s'étendant au-dessus de la deuxième extrémité (T).

10. Colonne de guidage de plante selon l'une quelconque des revendications précédentes, dans laquelle la colonne (Z) est dotée d'un moyen de fermeture amovible (8) qui, dans une première position, ferme la deuxième extrémité (T) de la colonne (Z) d'une manière substantiellement opaque et, dans une deuxième position, ouvre la deuxième extrémité (T) de la colonne (Z).

11. Colonne de guidage de plante selon l'une quelconque des revendications précédentes, dans laquelle la paroi latérale (1) de la colonne (Z) comporte un nombre limité de passages de croissance (9), de sorte qu'un nombre limité de branches de la plante (P) qui pousse dans l'espace de croissance (2) puissent pousser, par l'intermédiaire des passages de croissance (9), vers un environnement.

12. Colonne de guidage de plante selon l'une quelconque des revendications précédentes, dans laquelle la paroi latérale (1) de la colonne (Z) est dotée d'une partie de paroi amovible (10 ; 52) qui, dans une première position, ferme un accès (54) à l'espace de croissance (2) situé dans la paroi latérale (1) et, dans une deuxième position, ouvre cet accès (54).

13. Colonne de guidage de plante selon la revendication 12, dans laquelle la partie de paroi amovible (10) est conçue pour être assemblée.

14. Colonne pour plante selon la revendication 12 ou 13, dans laquelle la colonne pour plante (Z) comprend une colonne intérieure (50) dans laquelle ledit accès (54) a été ménagé, où ladite partie de paroi amovible comprend une colonne extérieure (52), qui peut être placée, en particulier que l'on peut faire coulisser sur la colonne intérieure (50).

15. Colonne de guidage de plante selon l'une quelconque des revendications précédentes, dans laquelle la longueur de la colonne (Z) est d'au moins 50 centimètres, et plus particulièrement d'au moins 100 centimètres.

16. Colonne de guidage de plante selon l'une quelconque des revendications précédentes, dans laquelle la longueur de la colonne (Z) est d'au moins 150 cm.

17. Colonne de guidage de plante selon l'une quelconque des revendications précédentes, dans laquelle un élément de sol est fourni pour être placé dans le sol (G), dans lequel une plante est ou peut être placée, alors qu'une colonne peut être placée dans ou sur ledit élément de sol pour former la colonne pour plante (Z), au moins l'espace de croissance (2).

18. Colonne de guidage de plante selon l'une quelconque des revendications précédentes, dans laquelle la colonne (Z) est dotée d'un éclairage.

19. Colonne de guidage de plante selon l'une quelconque des revendications précédentes, dans laquelle le dispositif de support (7) est formé à partir d'un fil et/ou d'un matériau de toile le long duquel et au travers duquel la plante peut pousser et être guidée.

20. Ensemble comprenant un certain nombre de colonnes de guidage de plantes (Z) selon l'une quelconque des revendications précédentes, placées les unes à côté des autres.

21. Ensemble selon la revendication 20, dans lequel les colonnes (Z) sont reliées les unes aux autres par l'intermédiaire d'un moyen de liaison.

22. Abri qui est maintenu à une certaine distance au-dessus d'une surface de sol (G) par un certain nombre de supports, où les supports comprennent des colonnes de guidage de plantes (Z) selon l'une quelconque des revendications 1 à 19.

23. Procédé de formation d'un ornement de jardin ou construction analogue, dans lequel une colonne de guidage (Z) est placée dans, sur le sol (G), ou au-dessus de celui-ci, où une plante, en particulier une plante grimpante, est plantée dans, ou au niveau de, la première extrémité (B) de la colonne de guidage (Z) située à proximité du sol, et par la suite est guidée dans et à travers la colonne de guidage (Z) jusqu'à la deuxième extrémité (T) de la colonne de guidage (Z), **caractérisé en ce que** la colonne de guidage (Z) est dotée au niveau de la deuxième extrémité (T), ou au moins près de celle-ci, d'un dispositif de support (7) agencé pour offrir un support à une plante (P) qui pousse hors de l'espace de croissance (2) au niveau de la deuxième extrémité (T), où la plante est guidée le long du dispositif de support (7) .

24. Procédé selon la revendication 23, dans lequel la colonne de guidage (Z) est bâtie à partir d'une structure (40, 42) qui est fixée dans le sol (G), où des éléments de recouvrement (47) sont placés contre la structure (40, 42) autour d'une plante (P) guidée le long de la structure, en vue de dissimuler la plante d'une manière substantiellement opaque, au moins ailleurs qu'à la deuxième extrémité (T) de la colonne de guidage (Z) ainsi formée.

25. Procédé selon l'une quelconque des revendications 23 et 24, dans lequel la colonne de guidage (Z) est bâtie à partir d'au moins une colonne intérieure (50) et une colonne extérieure (52), où la colonne intérieure (50) est dotée d'une ouverture en forme de fente (54) s'étendant substantiellement dans la direction longitudinale, laquelle colonne intérieure (50) est introduite dans le sol (G) avec une première extrémité (B), de sorte que ladite ouverture (54) atteigne le sol ou soit proche du sol, où, près de ladite ouverture (54), une plante (P) est placée dans le sol et est guidée jusque dans l'espace de croissance (2), optionnellement par l'intermédiaire de ladite ouverture (54), après quoi une colonne extérieure (52) est fournie ensuite sur la colonne intérieure (50) afin de fermer ladite ouverture (54) .
